(19) Europäisches Patentamt
European Patent Office
Office européen des brevets

(11) Veröffentlichungsnummer: **0 025 572**
**B1**

# (12) EUROPÄISCHE PATENTSCHRIFT

(45) Veröffentlichungstag der Patentschrift: **23.03.83**

(51) Int. Cl.³: **C 07 F 9/40**, C 08 J 9/00, C 08 L 75/04

(21) Anmeldenummer: **80105317.4**

(22) Anmeldetag: **05.09.80**

## (54) Dialkoxy-phosphonyl-N-alkyl-ameisensäureamide und ihre Verwendung als Zusatzmittel bei der Herstellung von flammkaschierbaren und hochfrequenzverschweissbaren Polyurethanschaumstoffen.

(30) Priorität: **17.09.79 DE 2937509**

(43) Veröffentlichungstag der Anmeldung: **25.03.81 Patentblatt 81/12**

(45) Bekanntmachung des Hinweises auf die Patenterteilung: **23.03.83 Patentblatt 83/12**

(84) Benannte Vertragsstaaten: **BE DE FR GB IT NL SE**

(56) Entgegenhaltungen:
**EP-A-0 003 008**
**US-A-2 909 558**
**US-A-3 005 010**
**JOURNAL OF THE AMERICAN CHEMICAL SOCIETY, band 77, 1955 T. REETZ et al.: »Carbamoylphosphonates«, Seiten 3813-15**
**Kunststoffhandbuch, Band VII, 1966, München, Seite 475**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Haas, Peter, Dr., Zwengenberger Strasse 43, D-5657 Haan 1 (DE)**
Erfinder: **Müller, Heinz, Dr., Feldsieferweg 1, D-5090 Leverkusen 3 (DE)**
Erfinder: **Seifert, Peter, Dr., August-Kierspel-Strasse 161, D-5060 Bergisch Gladbach 2 (DE)**
Erfinder: **Wagner, Kuno, Dr., Am Kiesberg 8, D-5090 Leverkusen 1 (DE)**
Erfinder: **Findeisen, Kurt, Dr., In der Follmühle 10, D-5068 Odenthal 2 (DE)**
Erfinder: **König, Klaus, Dr., Heymannstrasse 50, D-5090 Leverkusen 1 (DE)**

**EP 0 025 572 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Dialkoxy-phosphonyl-N-alkyl-ameisensäureamide und ihre Verwendung als Zusatzmittel bei der Herstellung von flammkaschierbaren und hochfrequenzverschweißbaren Polyurethanschaumstoffen

Urethangruppen aufweisende Schaumstoffe, die durch Umsetzung von Polyisocyanaten mit Polyetherpolyolen und/oder Polyesterpolyolen erhalten werden, sind bekannt und finden weite Anwendung. Die Anwendungsmöglichkeiten der Polyurethanschaumstoffe werden indessen in manchen Bereichen durch nicht oder ungenügend vorhandene Hochfrequenz-(HF)-Verschweißbarkeit sowie fehlende Flammkaschierbarkeit stark eingeschränkt. Einsatzgebiete, wo diese Eigenschaften besonders geschätzt werden, sind beispielsweise die Herstellung der Türverkleidung bei Automobilen, die die Verschweißung von Schaumstoff-Folien mit sich selbst oder mit anderen Werkstoffen erfordert, die Erzeugung von Steppeffekten oder die Herstellung von Formkörpern. Weiterhin werden durch Flammkaschierung Verbundsysteme mit Textilien, z. B. als Polsterauflagen, hergestellt, die nachträglich durch HF-Verschweißung profiliert und/oder verformt werden.

Es ist bekannt, Urethangruppen aufweisende Schaumstoffe, die hochfrequenzverschweißbar sind, durch Umsetzung von Verbindungen mit mehreren aktiven Wasserstoffatomen mit Polyisocyanaten in Gegenwart von Wasser und/oder Treibmitteln, Emulgatoren, Stabilisatoren, Katalysatoren sowie anderer Hilfsmittel und von Verbindungen, die eine HF-Verschweißbarkeit und Flammkaschierbarkeit bewirken, herzustellen oder die fertigen Schaumstoffe durch Nachbehandlung HF-verschweißbar zu machen.

Als HF-verschweißbarmachende Verbindungen sind z. B. pulverisierte Polyvinylacetate, Polyvinylchloride bzw. Copolymere (BE-PS-719 875), thermoplastische Polymerisate wie Äthylenvinylacetat, Cellulosederivate wie Äthyl- oder Benzylcellulose, Acrylatpolymerisate oder Polyäthylen (DE-OS-1 769 583) bekanntgeworden.

Durch Zugabe von wasserlöslichen anorganischen oder organischen Salzen, z. B. von Natriumthiosulfat, Natriumacetat (DE-OS-1 669 888) kann die HF-Verschweißbarkeit von Polyurethanschaumstoffen ebenfalls gesteigert werden. Eine Verbesserung der HF-Verschweißbarkeit von Polyurethan-Schaumstoffen durch Nachbehandlung ist z. B. in der FR-PS-1 329 849, FR-PS-1 344 444 und FR-PS-1 343 681 beschrieben.

Die Zugabe von Pulvern oder Thermoplastlösungen zu den Ausgangskomponenten der Polyurethanherstellung ist mit Nachteilen verbunden. Um einen sichtbaren Effekt zu erzielen, müssen größere Mengen eingesetzt werden, was beispielsweise infolge einer starken Viskositätserhöhung technische Probleme mit sich bringt und zu Produktionsschwierigkeiten führt. Die Schaumstoffe selbst werden durch diese Produkte in ihren Eigenschaften negativ beeinflußt. Die nachträgliche Imprägnierung der fertigen Schaumstoffe ist auch nicht problemlos. Es ist beispielsweise sehr aufwendig, Schaumstoffe größerer Dicke zu imprägnieren. Außerdem ist die Entfernung des Lösungsmittels und die Trocknung der nachbehandelten Schaumstoffe generell mit erhöhtem technischen Aufwand verbunden. Zudem stellt eine Nachbehandlung einen zusätzlichen Verarbeitungsschritt dar.

Die bekannten Methoden zur Herstellung von HF-verschweißbaren Polyurethanschaumstoffen sind mit erheblichem technischen (und finanziellen) Aufwand verbunden und führen zu Schaumstoffen mit nicht ausreichendem Eigenschaftsniveau. Darüber hinaus sind derartige Schaumstoffe, sofern es sich um Polyetherschaumstoffe handelt, nicht ohne weiteres flammkaschierbar, sondern müssen dazu noch mit Zusätzen wie beispielsweise Derivaten der phosphorigen oder Phosphor-Säure bei ihrer Verschäumung versehen werden, was bisher in der Regel die mechanischen Eigenschaften nachteilig beeinflußt hat. In der DE-AS-1 127 583 wird die Verwendung von phosphorhaltigen Isocyanaten zwecks Herstellung von schwer entflammbaren Polyurethan-Schaumstoffen beschrieben. Die mit dieser DE-AS gegebene Lehre ist jedoch sowohl von der zugrundeliegenden Aufgabe als auch von dem aufgezeigten Lösungsweg unterschiedlich zu der erfindungsgemäßen Lehre. Auch das Kunststoff-Handbuch, herausgegeben von Vieweg Höchtlen, Band VII, Polyurethane, lehrt nicht die vorliegende Erfindung, wenn auch auf Seite 475 darauf hingewiesen wird, daß durch Zugabe von organischen Phosphorverbindungen die Verschweißbarkeit von Polyurethanschaumstoffen mittels Hochfrequenz erleichtert wird. Überraschenderweise wurden nun gefunden, daß durch die Verwendung der erfindungsgemäßen Zusätze die HF-Verschweißbarkeit von PU-Schaumstoffen wesentlich verbessert werden kann, ohne daß das Werteniveau, z. B. Stauchhärte und Druckverformungsrest, herabgesetzt wird.

Gegenstand der Erfindung ist die Verwendung von Dialkoxyphosphonyl-N-alkyl-ameisensäureamiden der allgemeinen Formel

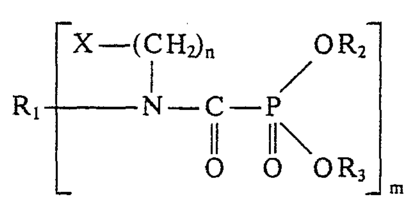

in der

- m eine ganze Zahl von 1 bis 3,
- n eine ganze Zahl zwischen 0 und 8,
- X Halogen, Wasserstoff, $C_1-C_6$-Alkyl, $-O-R$ ($R=C_1-C_6$-Alkyl), oder

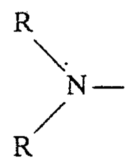

($R=C_1-C_6$-Alkyl),

- $R_1$ Wasserstoff, $C_1-C_{10}$-Alkyl, $C_1-C_{10}$-Alkylen, Cyclohexyl, Cyclohexylen, 1,3,3-Trimethylcyclohexylen, $C_6-C_{10}$-Aryl oder $C_6-C_{10}$-Arylen und
- $R_2$ und $R_3$ (gleich oder verschieden) $C_1-C_{10}$-Alkyl darstellen,

als Zusatzmittel bei der Herstellung von flammkaschierbaren und hochfrequenzverschweißbaren Polyurethanschaumstoffen aus Polyisocyanaten, mindestens zwei gegenüber Isocyanaten reaktionsfähigen Wasserstoffatomen aufweisenden Verbindungen vom Molekulargewicht 400–10 000, gegebenenfalls Kettenverlängerungsmitteln vom Molekulargewicht 32–400 in Gegenwart von Wasser und/oder organischen Treibmitteln sowie gegebenenfalls in Gegenwart von Katalysatoren, Schaumstabilisatoren und weiteren, an sich bekannten Zusatz- und Hilfsmitteln, wobei die Dialkoxyphosphonyl-N-alkyl-ameisensäureamide in einer Menge von 0,1–10,0 Gew.-Teilen, bezogen auf 100 Gew.-Teile der mindestens zwei gegenüber Isocyanaten reaktionsfähige Wasserstoffatome aufweisenden Verbindungen vom Molekulargewicht 400–10 000, zugesetzt werden.

Die Erfindung betrifft bevorzugt die Verwendung von Dialkoxy-phosphonyl-N-alkyl-ameisensäureamiden der allgemeinen Formel

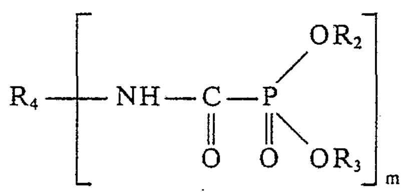

in der $R_4$ $C_1-C_{10}$-Alkyl, $C_1-C_{10}$-Alkylen, $C_6-C_{10}$-Aryl oder $C_6-C_{10}$-Arylen bedeutet und $R_2$, $R_3$ und m die bereits genannte Bedeutung haben,
als Zusatzmittel bei der Herstellung von Polyurethanschaumstoffen.

Gegenstand der Erfindung sind auch die neuen Dialkoxyphosphonyl-N-alkyl-ameisensäureamide der Formeln

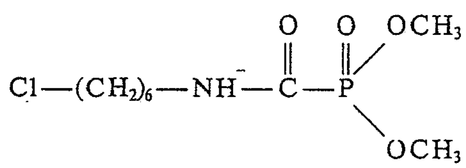

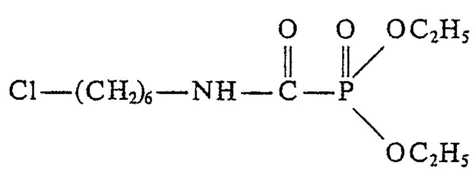

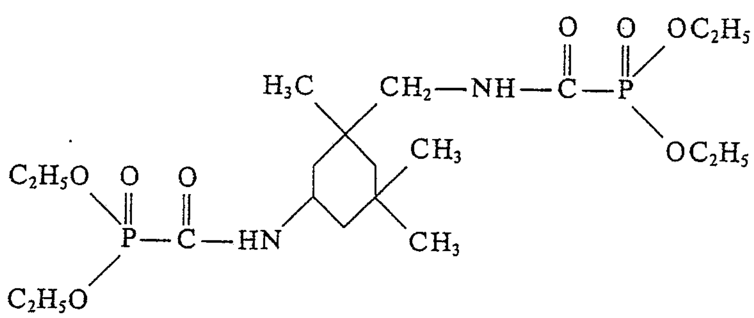

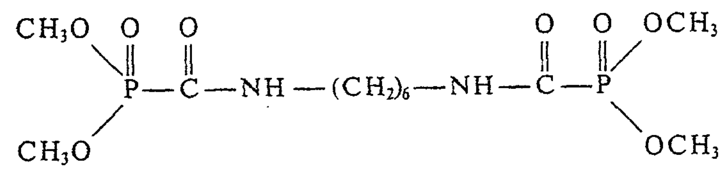

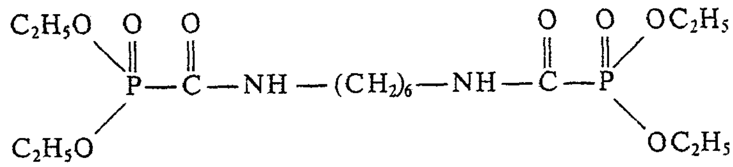

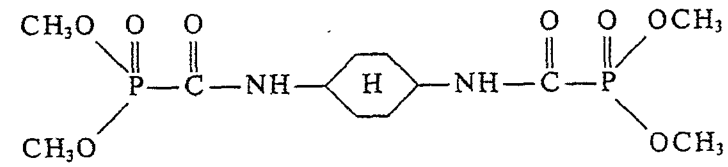

Die Herstellung der erfindungsgemäß zu verwendenden, die Flammkaschierbarkeit und Hochfrequenzverschweißbarkeit von Polyurethanschaumstoffen bewirkenden Verbindungen erfolgt nach an sich bekannten Methoden, z. B. durch Umsetzen von Carbamidsäurechloriden und Trialkylphosphiten (T. Reetz, Am. Soc. 77, 3513 [1955]; Arbusov, Izv. Akad. SSSR, 1952, 847 [C. A. 47, 10 457, 1953]) oder z. B. durch Addition von Isocyanaten an Dialkylphosphite nach dem Reaktionsschema

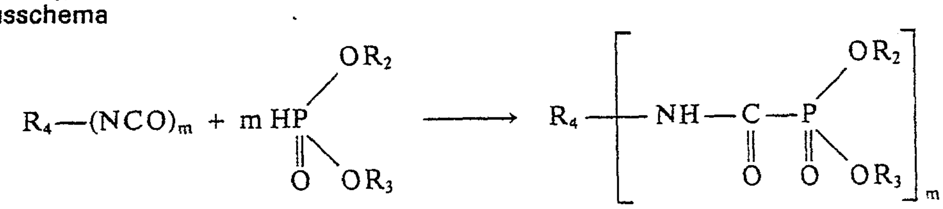 II

wobei $R_4$, $R_2$, $R_3$ und m die bereits genannte Bedeutung aufweisen. Verbindungen der allg. Formel II sind bevorzugt.

Als Isocyanate kommen sowohl aliphatische, cycloaliphatische und aromatische Monoisocyanate wie Methyl-, Methoxymethyl-, Äthyl-, n-Butyl-, n-Hexyl-, Cyclohexyl-, Phenyl-, Naphthylisocyanat als auch aliphatische, cycloaliphatische oder aromatische Di- und Triisocyanate, wie sie z. B. in der DE-OS-2 737 951, Seiten 24–26, genannt werden, in Frage.

Als Beispiele für erfindungsgemäß zu verwendende Dialkoxyphosphonyl-N-alkyl-ameisensäureamide seien genannt:

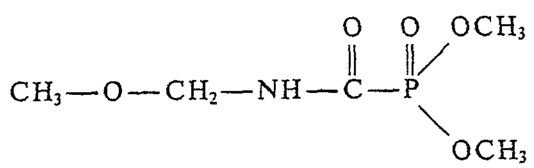 bevorzugt

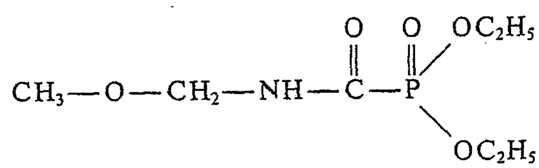 bevorzugt

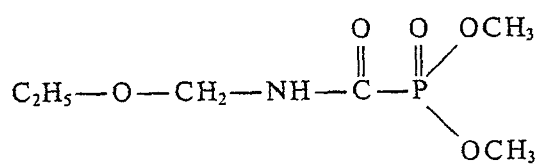 bevorzugt

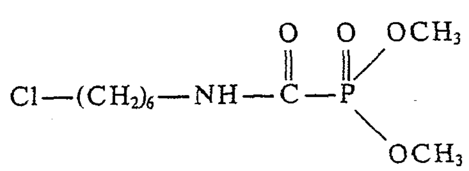 bevorzugt

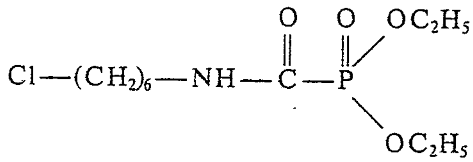

bevorzugt

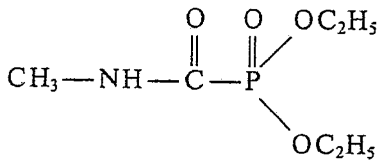

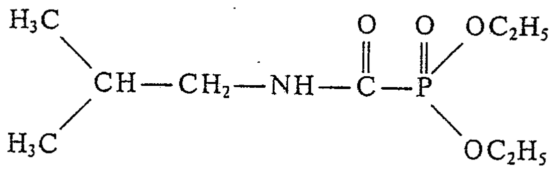

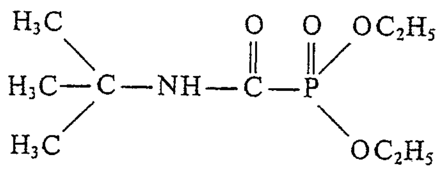

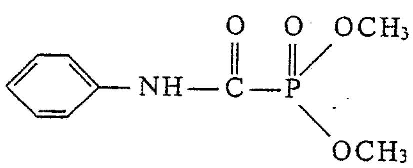

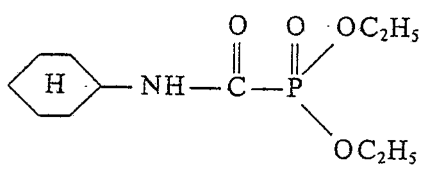

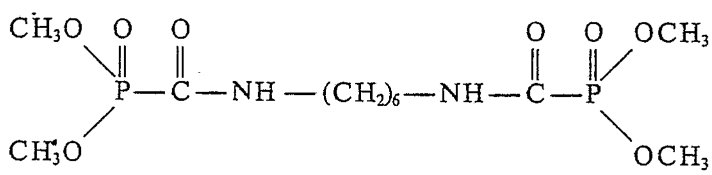

bevorzugt

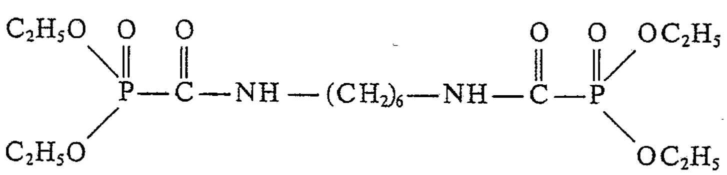

bevorzugt

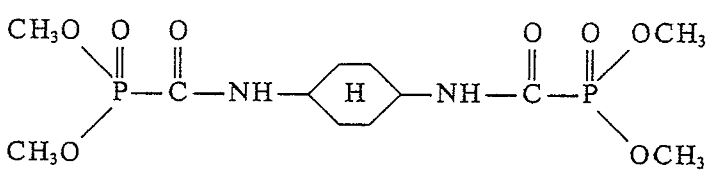

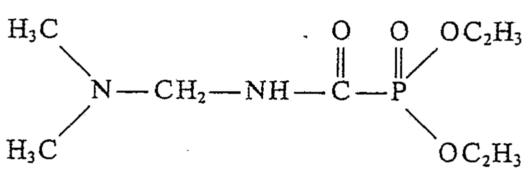

bevorzugt

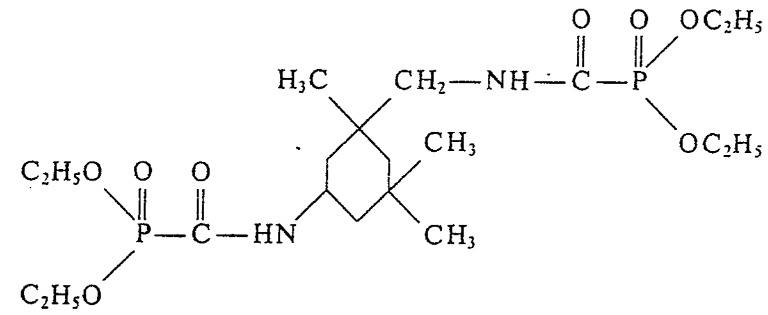

In der Regel werden 0,1 bis 10,0 Gew.-Tle., bevorzugt 0,5 bis 5,0 Gew.-Tle. der erfindungsgemäß zu verwendenden Bisalkoxy-phosphonylalkylameisensäureamide, bezogen auf 100 Gew.-Tle. der mindestens zwei aktive Wasserstoffatome aufweisenden Verbindung vom Molekulargewicht 400 bis 10 000, eingesetzt.

Der Zusatz dieser Verbindungen der genannten allgemeinen Formeln I und II bewirkt in Polyurethan-Schaumstoffen eine Flammkaschierbarkeit sowie zusätzlich eine glatte HF-Verschweißbarkeit mit textilen Deckschichten aus z. B. Polyamid, Polyacrylnitril, Polyurethan; weiterhin mit Deckfolien aus z. B. PVC.

Bei gleicher Schweißenergie und Druck sinkt die für eine glatte, opak scheinende Verschweißnaht notwendige Schweißzeit deutlich ab (siehe Ausführungsbeispiele). Die Verschweißversuche wurden an Polyamid-Schaumstoff-Sandwich-Verbundsystemen, Gesamt-Stärke 10 mm, durchgeführt oder an 2 je 10 mm starken Schaumfolien.

Als Ausgangskomponenten für die Herstellung von Polyurethanschaumstoffen werden eingesetzt:

1. Aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

   $Q(NCO)_n$

   in der
   n = 2 – 4, vorzugsweise 2, und
   Q einen aliphatischen Kohlenwasserstoffrest mit 2 – 18, vorzugsweise 6 – 10 C-Atomen, einen cycloaliphatischen Kohlenwasserstoffrest mit 4 – 15, vorzugsweise 5 – 10 C-Atomen, einen aromatischen Kohlenwasserstoffrest mit 6 – 15, vorzugsweise 6 – 13 C-Atomen, oder einen araliphatischen Kohlenwasserstoffrest mit 8 – 15, vorzugsweise 8 – 13 C-Atomen,
   bedeuten, z. B. solche, wie sie in der DE-OS-2 737 951, Seiten 24 – 26, beschrieben werden.
   Bevorzugte Polyisocyanate sind aromatische Polyisocyanate.
   Besonders bevorzugt werden in der Regel die technischen leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«) und Carbodiimidgruppen, Urethangruppen, Allophanatgruppen, Isocyanuratgruppen, Harnstoffgruppen oder Biuretgruppen aufweisenden Polyisocyanate (»modifizierte Polyisocyanate«), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
2. Als Ausgangskomponenten ferner Verbindungen mit mindestens zwei gegenüber Isocyanaten reaktionsfähigen Wasserstoffatomen von einem Molekulargewicht in der Regel von 400 – 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 6000, vorzugsweise 2000 bis 4000, z. B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.
   Die in Frage kommenden Verbindungen werden z. B. in der DE-OS-2 737 951, Seiten 26 – 29, beschrieben.
   Die in Frage kommenden Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyether- und einem Polyesterpolyol) durch Veretherung in Gegenwart einer starken Säure zu einem höhermolekularen Polyol kondensieren, welches aus über Etherbrücken verbunden verschiedenen Segmenten

aufgebaut ist. Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind (vgl. z. B. DE-OS-2 737 951, Seite 31).

Auch durch Vinylpolymerisate modifizierte Polyhydroxylverbindungen, wie sie z. B. durch Polymerisation von Styrol und Acrylnitril in Gegenwart von Polyethern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyetherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Vertreter der genannten erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl Hanser-Verlag, München, 1966, z. B. auf den Seiten 45–71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400–10 000, z. B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen kommen die in der DE-OS 2 737 951 auf Seite 30 genannten Verbindungen in Frage.

Als niedermolekulare Polyole kommen erfindungsgemäß auch die Gemische von Hydroxyaldehyden und Hydroxyketonen (»Formose«) bzw. die hieraus durch Reduktion erhaltenen mehrwertigen Alkohole (»Formit«) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildern und/oder Phosphiten ein (DE-Offenlegungsschriften 2 738 513 und 2 738 532). Auch Lösungen von

Polyisocyanatadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidon, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Als Hilfs- und Zusatzmittel:

Wasser und/oder leicht flüchtige anorganische oder organische Substanzen als Treibmittel, wie sie in der DE-OS 2 737 951 (Seite 32) beschrieben werden sowie gegebenenfalls Katalysatoren der an sich bekannten Art, z. B. solche, wie in der DE-OS 2 737 951 (Seiten 32 und 33) beschrieben werden.

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Selbstverständlich können alle Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hander-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Oberflächenaktive Zusatzstoffe, wie Emulgatoren und Schaumstabilisatoren, Reaktionsverzögerer und weitere Zusatzstoffe (vergl. zu allen diesen Zusatzmitteln DE-OS 2 737 951, Seite 34) können ebenfalls mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlein, Carl-Hanser-Verlag, München 1966, z. B. auf den Seiten 103 bis 113 beschrieben.

## Beispiel 1

### Dimethoxyphosphonyl-N-methoxymethyl-ameisensäureamid

In 220 g (2 Mol) Dimethylphosphit und 5 g Triäthylamin werden 174 g (2 Mol) Methoxymethylisocyanat getropft, anschließend wird auf 60°C erhitzt, bis die im IR-Spektrum durch die Schwingung der Isocyanatgruppe bedingte Bande bei 2150 $cm^{-1}$ verschwunden ist; man zieht niederflüchtige Anteile im Vakuum ab.

Ausbeute quantitativ; hellgelbes Öl: $n_D^{20°}$: 1,4515;
Analyse für $C_5H_{12}NO_5P$ (Molekulargewicht: 197)
ber. C: 30,4, H: 6,1, N: 7,1, P: 15,7;
gef. C: 31,5, H: 6,1, N: 7,8, P: 15,3;

Beispiel 2

Diäthoxyphosphonyl-N-chlorhexyl-ameisensäureamid

Aus 138 g (1 Mol) Diäthylphosphit, 3 g Triäthylamin und 161,5 g (1 Mol) Chlorhexylisocyanat gemäß Beispiel 1.

Ausbeute quantitativ; hellgelbes Öl: $n_D^{20°}$: 1,4678;
Analyse für $C_{11}H_{23}ClNO_4P$ (Molekulargewicht: 299,5)
ber. C: 44,0, H: 7,7, Cl: 11,8, P: 10,3
gef. C: 45,0, H: 8,0, Cl: 11,5, P: 10,3

Beispiel 3

Diethoxyphosphonyl-N-isobutyl-ameisensäureamid

Aus 138 g (1 Mol) Diäthylphosphit, 3 g Triäthylamin und 99 g (1 Mol) Isobutylisocyanat analog Beispiel 1.

Ausbeute quantitativ; hellgelbes Öl: $n_D^{20°}$: 1,4488
Analyse für $C_{15}H_{20}NO_4P$ (Molekulargewicht: 237)
ber. C: 59,0, H: 6,5, N: 4,6, P: 10,1
gef. C: 58,2, H: 6,8, N: 4,9, P: 10,0

Beispiel 4

N,N-Hexamethylenbis-(diäthoxyphosphonyl-ameisensäureamid)

Aus 138 g (1 Mol) Diäthylphosphit, 2 g Triäthylamin und 84 g (0,5 Mol) Hexamethylendiisocyanat analog Beispiel 1.

Ausbeute quantitativ, hellgelbes Öl;
Analyse für $C_{16}H_{34}N_2O_8P_2$ (Molekulargewicht: 444)
ber. C. 43,0, H: 8,0, N: 6,3, P: 14,1
gef. C: 43,5, H: 8,0, N: 6,5, P: 13,8

Beispiel 5

Diäthoxyphosphonyl-N-methoxymethyl-ameisensäureamid

Aus 138 g (1 Mol) Diäthylphosphit, 3 g Triäthylamin und 87 g (1 Mol) Methoxymethylisocyanat gemäß Beispiel 1.

Ausbeute quantitativ, hellgelbes Öl;
Analyse für $C_7H_{16}NO_5P$ (Mole,ulargewicht: 225)
ber. C: 37,3, H: 7,1, N: 6,2, P: 13,8
gef. C: 38,1, H: 7,1, N: 7,2, P: 13,2

Beispiel 6

Dimethoxyphosphonyl-N-chlorhexyl-ameisenwäureamid

Aus 110 g (1 Mol) Dimethylphosphit, 3 g Triäthylamin und 161,5 g (1 Mol) Chlorhexylisocyanat gemäß Beispiel 1.

Ausbeute 254 g, entspr. 94% d. Th. eines leicht gelben Öls.
Analyse für $C_9H_{19}ClNO_4P$ (Molekulargewicht: 271)
ber. C: 39,8, H: 7,0, Cl: 13,1, N: 5,1, P: 11,4
gef. C: 39,2, H: 7,2, Cl: 12,8, N: 5,3, P: 11,8

## Beispiel 7

### Diäthoxyphosphonyl-N-methyl-ameisensäureamid

Aus 138 g (1 Mol) Diäthylphosphit, 3 g Triäthylamin und 57 g (1 Mol) Methylisocyanat gemäß Beispiel 1.

Ausbeute 150 g, entsprechend 88% d. Th. eines leicht gelben Öls.
Analyse für $C_4H_{16}NO_4P$ (Molekulargewicht: 167)
ber. C: 28,8, H: 6,0, N: 8,4, P: 18,5
gef. C: 29,0, H: 6,0, N: 8,7, P: 17,4

## Beispiel 8

Die Herstellung von weichelastischen, hochfrequenzverschweißbaren und flammkaschierten Polyether-Polyurethanschaumstoffen durch Zusatz der in den Beispielen 1–7 beschriebenen Phosphonylameisensäureamide erfolgte auf einer kontinuierlich arbeitenden Hochdruckmaschine der Fa. Henneke, Birlinghoven, Siegkreis, Bundesrepublik Deutschland, wobei jeweils 100 Teile eines (auf Trimethylolpropan gestarteten) Propyneoxid-Polyethers der OH-Zahl 45 verwendet wurden; die Verfahrensweise ist im folgenden tabellarisch zusammengefaßt. Die erhaltenen Schaumstoffe wurden mit einer Strichelektrode von 10 $cm^2$ Oberfläche unter einem Druck von 9 $kp/cm^2$ verschweißt, und zwar unter Verwendung von je 10 mm starken Schaumstoffolien (Schaum/Schaum) sowie einem Verbundsystem aus einem Polyamid-Velours, 8 mm Schaumfolie und einem Polyamid-Charmeuse.

Die Verschweißspannung betrug 650 mV, die Stromstärke 480 mA.

Den Rezepturen wurden weiterhin zugesetzt 0,2 Gew.-Tle. Zinn(II)oktoat, 0,7 Gew.-Tle. eines handelsüblichen Weichschaumstabilisators, 0,6 Teile Dimethylethanolamin und 0,1 Teil des Aminaktivators (Desmorapid PS 207, BAYER AG). Verwendet wurde ein Toluylendiisocyanat-2,4- und -2,6-Isomerengemisch (80 : 20 Gew.-%).

| | Beispiele 8a | 8b | 8c | 8d | 8e |
|---|---|---|---|---|---|
| Verbindung gemäß Beispiel 1 | – | 2,0 | 1,0 | 2,0 | 3,0 |
| Gew.-Teile Wasser | 2,5 | 2,5 | 3,0 | 3,0 | 3,0 |
| Raumgewicht ($kg/m^3$) | 33 | 33 | 39 | 39 | 39 |
| Zugfestigkeit (KPa) | 105 | 130 | 170 | 150 | 170 |
| Bruchdehnung (%) | 230 | 290 | 270 | 255 | 230 |
| Stauchhärte 40 (KPa) | 3,9 | 3,5 | 3,8 | 3,7 | 3,6 |
| Druckverformungsrest 90 (%) | 3,4 | 5,8 | 4,5 | 6,1 | 4,8 |
| Stauchhärteabfall nach Ford (%) | 35 | 25 | 20 | 19 | 27 |
| Verschweißzeit Schaum/Schaum (sec) über | 10 | 4 | 5 | 4 | 3 |
| Verschweißzeit Schaum/Polyamid Verbund (sec) | 8 | 1,3 | 1,5 | 1,3 | 1,0 |

Die erhaltenen Schaumstoffe sind offenzellig, störungsfrei und problemlos flammkaschierbar. Die entstandenen Schweißnähte der Beispiele 8b bis 8e sind frei von Verhärtungsstellen, deutlich ausgeprägt und zeigen eine starke Haftung.

Beispiel 9

Die Verfahrensweise entspricht der des Beispiels 8, jedoch werden 2,5 Teilen Wasser und 33 Teilen Toluylendiisocyanat verwendet.

| | Beispiele 9a | 9b | 9c | 9d |
|---|---|---|---|---|
| Verbindung gemäß Beispiel 5 | – | 1,0 | 2,0 | 3,0 |
| Raumgewicht | 37 | 36 | 38 | 38 |
| Zugfestigkeit (KPa) | 115 | 110 | 110 | 110 |
| Bruchdehnung (%) | 295 | 315 | 330 | 340 |
| Stauchhärte (KPa) | 3,4 | 3,1 | 3,1 | 3,2 |
| Druckverformungsrest 90 (%) | 3,4 | 3,8 | 4,0 | 4,0 |
| Verschweißzeit Schaum/Schaum(sec) über | 10 | 5 | 4 | 4 |
| Verschweißzeit Schaum/Polyamid/Verbund (sec) | 8 | 2,5 | 2,0 | 1,5 |

Die entstandenen Schweißnähte von 9b bis 9d sind im Gegensatz zu 9a deutlich ausgeprägt, frei von Verhärtungsstellen und zeigen eine starke Haftung.

Beispiel 10

Die Verfahrensweise entspricht der des Beispiels 8.

| | Beispiele 10a | 10b | 10c | 10d |
|---|---|---|---|---|
| Verbindung gemäß Beispiel 2 | – | 1,0 | 3,0 | 5,0 |
| Raumgewicht (kg/m$^3$) | 36 | 36 | 38 | 36 |
| Zugfestigkeit | 110 | 120 | 120 | 110 |
| Bruchdehnung (%) | 305 | 370 | 350 | 360 |
| Stauchhärte | 3,3 | 3,2 | 3,3 | 3,3 |
| Verschweißzeit Schaum/Schaum (sec) über | 10 | 5 | 5 | 5 |
| Verschweißzeit Schaum/Polyamid/Verbund (sec) | 8 | 2,5 | 2,5 | 2,5 |

Die resultierenden Schweißnähte der Beispiele 10b bis 10d sind im Gegensatz zu 10a frei von Verhärtungsstellen, deutlich ausgeprägt und zeigen eine starke Haftung.

Beispiel 11

Die Verfahrensweise entspricht der des Beispiels 8.

| | Beispiele 11a | 11b | 11c | 11d |
|---|---|---|---|---|
| Verbindung gemäß Beispiel 4 | – | 1,0 | 2,0 | 3,0 |
| Raumgewicht (kg/$m^3$) | 37 | 37 | 36 | 36 |
| Zugfestigkeit (KPa) | 115 | 120 | 120 | 115 |
| Bruchdehnung (%) | 310 | 315 | 320 | 310 |
| Verschweißzeit Schaum/Schaum (sec) | 10 | 5 | 5 | 3 |
| Verschweißzeit Schaum/Polyamid/Verbund (sec) | 8 | 2 | 2,5 | 1,7 |

Die resultierenden Schäume 11b–11d waren offenzellig, störungsfrei und zeigten eine gute Nahtbildung an der Verschweißstelle.

Beispiel 12

Die Herstellung eines weichelastischen, HF-verschweißbaren Polyesterpolyurethanschaumstoffs erfolgt unter Verwendung von 100 Teilen eines Polyesterpolyols (aus Adipinsäure, Äthylenglykol und Trimethylolpropan) der OH-Zahl 60, 38 Teilen Toluylendiisocyanat, 3 Teilen Wasser, 1,5 Teilen N-Methylmorpholin und 3 Teilen eines handelsüblichen Esterdispergiermittels.

| | Beispiele 12a | 12b | 12e | 12d |
|---|---|---|---|---|
| Zusatz nach Beispiel 2 | – | 1,0 | 2,0 | 3,0 |
| Raumgewicht (kg/$m^3$) | 34 | 35 | 35 | 35 |
| Zugfestigkeit (KPa) | 130 | 120 | 130 | 125 |
| Bruchdehnung (%) | 295 | 290 | 290 | 300 |
| Verschweißzeit Schaum/Schaum (sec) (sec) | 10 | 5 | 5 | 5 |
| Verschweißzeit Schaum/Polyamid/Verbund (sec) | 4 | 2 | 1,8 | 1,7 |

Die resultierenden Schäume 12b–12d waren offenzellig, störungsfrei und zeigten eine gute Nahtbildung an der Verschweißstelle.

**Patentansprüche**

1. Verwendung von Dialkoxy-phosphonyl-N-alkyl-ameisensäureamiden der allgemeinen Formel

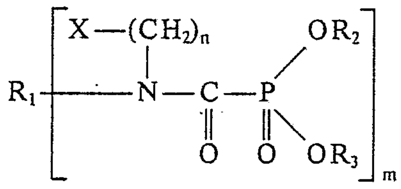

in der

m eine ganze Zahl von 1 bis 3,
n eine ganze Zahl zwischen 0 und 8,
X Halogen, Wasserstoff, $C_1-C_6$ Alkyl, $-O-R$ ($R = C_1-C_6$-Alkyl), oder

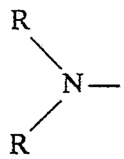

($R = C_1-C_6$-Alkyl),
$R_1$ Wasserstoff, $C_1-C_{10}$-Alkyl, $C_1-C_{10}$-Alkylen, Cyclohexyl, Cyclohexylen, 1,3,3-Trimethylcyclohexylen, $C_6-C_{10}$-Aryl oder $C_6-C_{10}$-Arylen und
$R_2$ und $R_3$ (gleich oder verschieden) $C_1-C_{10}$-Alkyl darstellen,

als Zusatzmittel bei der Herstellung von flammkaschierbaren und hochfrequenzverschweißbaren Polyurethanschaumstoffen aus Polyisocyanaten, mindestens zwei gegenüber Isocyanaten reaktionsfähige Wasserstoffatomen aufweisenden Verbindungen vom Molekulargewicht 400–10 000, gegebenenfalls Kettenverlängerungsmitteln vom Molekulargewicht 32–400 in Gegenwart von Wasser und/oder organischen Treibmitteln sowie gegebenenfalls in Gegenwart von Katalysatoren, Schaumstabilisatoren und weiteren, an sich bekannten Zusatz- und Hilfsmitteln, wobei die Dialkoxy-phosphonyl-N-alkyl-ameisensäureamids in einer Menge von 0,1–10,0 Gew.-Teilen, bezogen auf 100 Gew.-Teile der mindestens zwei gegenüber Isocyanaten reaktionsfähigen Wasserstoffatome aufweisenden Verbindungen vom Molekulargewicht 400–10 000, zugesetzt werden.

2. Verwendung von Dialkoxy-phosphonyl-N-alkyl-ameisensäure-amiden der allgemeinen Formel

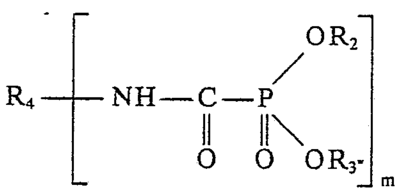

in der $R_4$ $C_1-C_{10}$-Alkyl, $C_1-C_{10}$-Alkylen, $C_6-C_{10}$-Aryl oder $C_6-C_{10}$-Arylen darstellt und $R_2$, $R_3$ und m die bereits genannte Bedeutung haben, als Zusatzmittel bei der Herstellung von Polyurethanschaumstoffen gemäß Anspruch 1.

3. Dialkoxy-phosphonyl-N-alkyl-ameisensäureamide der Formeln

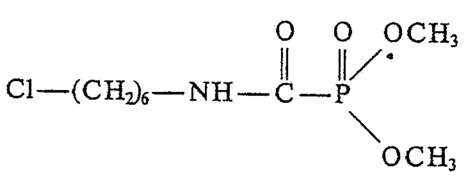

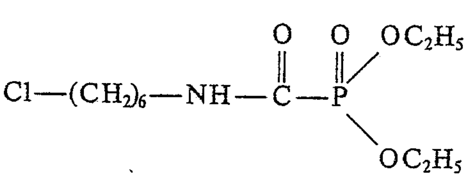

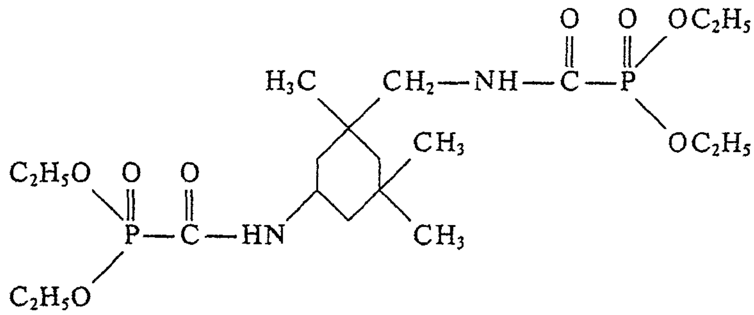

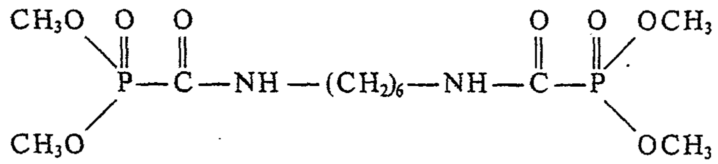

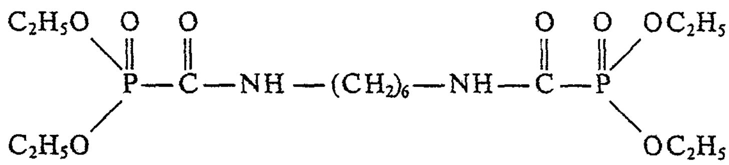

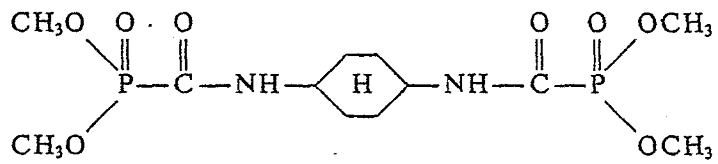

**Claims**

1. The use of dialkoxy-phosphonyl-N-alkyl-formic acid amides of the general formula

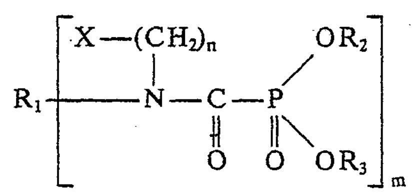

in which

m represents an integer of fro 1 to 3,
n represents an integer between 0 and 8,
X represents halogen, hydrogen, $C_1-C_6$-alkyl $-O-R$ ($R=C_1-C_6$-alkyl), or

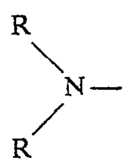

($R=C_1-C_6$-alkyl),
$R_1$, represents hydrogen, $C_1-C_{10}$-alkyl, $C_1-C_{10}$-alkylene, cyclohexyl, cyclohexylene, 1,3,3-trimethyl-cyclohexylene, $C_6-C_{10}$-aryl or $C_6-C_{10}$-arylene and
$R_2$ and $R_3$ (which are identical or different) represent $C_1-C_{10}$-alkyl,

as additives for the production of polyurethane foams which can be flame laminated and high frequency welded from polyisocyanats, compounds having a molecular weight of 400–10,000 and having at least two isocyanate-reactive hydrogen atoms, and optionally chain lengthening agents having a molecular weight of 32–400, in the presence of water and/or organic blowing agents and optionally in the presence of catalyts, foam stabilisiers and other known additives and auxiliary agents,

the dialkoxy-phosphonyl-N-alkyl-formic acids amides being added in an amount of 0.1 – 10.0 parts by weight, based on 100 parts by weight of the compounds having a molecular weight of 400 – 10,000 and having at least two isocyanate-reactive hydrogen atoms.

2. The use of dialkoxy-phosphonyl-N-alkyl-formic acid amides of the general formula

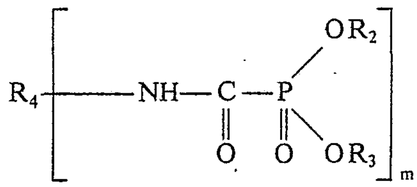

in which $R_4$ represents $C_1 - C_{10}$alkyl, $C_1 - C_{10}$-alkylene, $C_6 - C_{10}$-aryl or $C_6 - C_{10}$-arylene and $R_2$, $R_3$ and m have the meaning already mentioned, as additives for the production of polyurethane foams according to Claim 1.

3. Dialkoxy-phosphonyl-N-alkyl-formic acid amides of the formulae

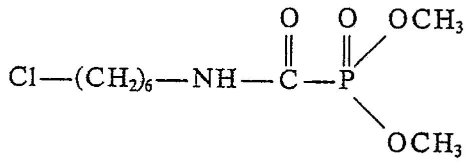

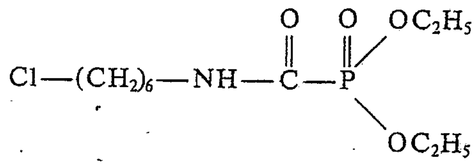

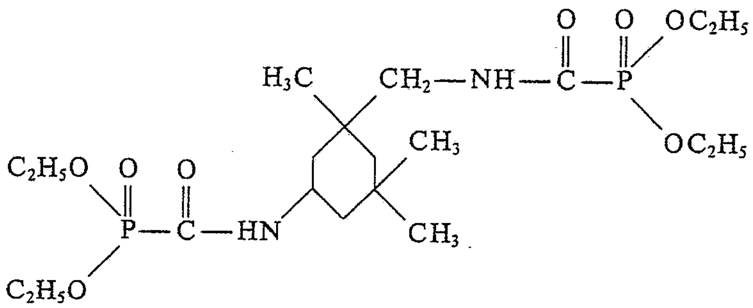

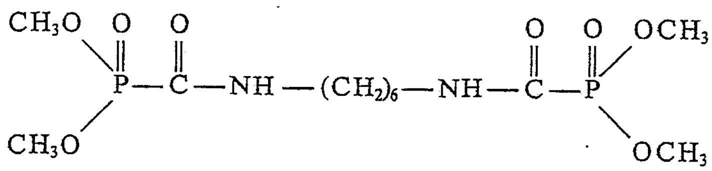

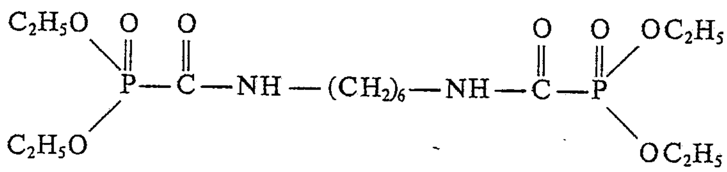

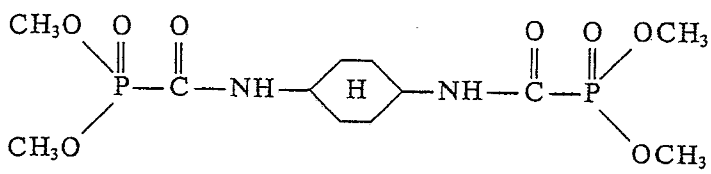

**Revendications**

1. Utilisation de dialcoxyphosphonyl-N-alkylformamides de formule générale

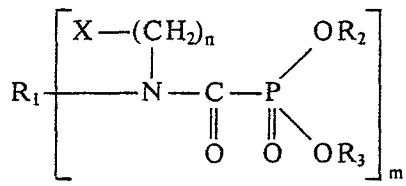

dans laquelle

m — est un nombre entier de 1 à 3,
n — est un nombre entier entre 0 et 8,
X — représente un halogène ou l'hydrogène ou un groupe alkyle en $C_1-C_6$ $-O-R$ (R = alkyle en $C_1-C_6$) ou

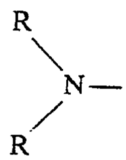

(R = alkyle en $C_1-C_6$),
$R_1$ — représente un atome d'hydrogène ou un groupe alkyle en $C_1-C_{10}$, alkylène en $C_1-C_{10}$, cyclohexyle, cyclohexylène, 1,3,3-triméthylcyclohexylène, aryle en $C_6-C_{10}$ ou arylène en $C_6-C_{10}$ et
$R_2$ et $R_3$ — (identiques ou différents) représentent des restes alkyle en $C_1-C_{10}$,

comme additifs dans la fabrication de mousses de polyuréthannes puovant être doublées à la flamme et soudées par haute fréquence à partir de polyisocyanates, de composés d'un poids moléculaire à partir de polyisocyanates, de composés d'un poids moléculaire de 400–10 000 ayant au moinds deux atomes d'hydrogène réatif vis-à-vis des isocyanates, éventuellement d'agents d'allongement de chaînes d'un poids moléculaire de 32–400 en présence d'eau et/ou de porogènes organiques, ainsi éventuellement qu'en présence de catalyseurs, de stabilisants de mousse et d'autre additifs et auxiliaires connus en soi, les dialcoxyphosphonyl-N-alkylformamides étant ajoutés en quantité en quantité de 0,1–10,0 parties en poids pour 100 parties en poids des composés d'un poids moléculaire de 400–10 000 ayant au moins deux atomes d'hydrogène réatifs vis-à-vis des isocyanates.

2. Utilisation de dialcoxyphosphonyl-N-alkylformamides de formule générale

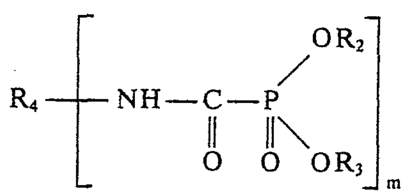

dans laquelle $R_4$ représente un reste alkyle en $C_1-C_{10}$, alkyléne en $C_1-C_{10}$aryle en $C_6-$aryle en $C_6-C_{10}$ ou arylène en $C_6-C_{10}$ et $R_2$, $R_3$ et m ont la signification déjà indiquée, comme additifs dans la préparation des mousses de polyuréthannes selon la revendication 1.

3. Dialoxyphosphonyl-N-alkylformamides de formules